# EUROPÄISCHE PATENTSCHRIFT

(11) **EP 1 082 467 B1**
(45) Veröffentlichungstag und Bekanntmachung des Hinweises auf die Patenterteilung: **08.05.2002**
(21) Anmeldenummer: 98940125.2
(22) Anmeldetag: 03.07.1998
(51) Int. Cl.: C21C 5/54, C21C 5/36

(54) **VERFAHREN ZUM BETRIEB EINES LICHTBOGENOFENS ZUM AUFBAU UND HALTEN EINER SCHAUMSCHLACKE**
METHOD FOR OPERATING AN ELECTRIC ARC FURNACE TO BUILD UP AND MAINTAIN FOAMED SLAG
PROCEDE POUR FAIRE FONCTIONNER UN FOUR A ARC UTILISE POUR CONSTITUER ET MAINTENIR A UNE CERTAINE SOLIDITE UN LAITIER MOUSSEUX

(30) Priorität: 08.05.1998 DE 19820612
(43) Veröffentlichungstag der Anmeldung: 14.03.2001
(73) Patentinhaber: Stein, Wilfried, 58135 Hagen (DE)
(72) Erfinder: STEIN, Wilfried, D-58135 Hagen (DE); STEIN, Karl, D-58097 Hagen (DE)
(74) Vertreter: Missling, Arne, Dipl.-Ing.
(86) Internationale Anmeldenummer: EP9804115
(87) Internationale Veröffentlichungsnummer: WO9958730

(56) Entgegenhaltungen:
- EP-A- 0 637 634
- EP-A- 0 692 544
- BE-A- 1 007 960
- DD-A- 228 831

## Beschreibung

Die Erfindung betrifft ein Verfahren zum Betrieb eines Lichtbogenofens zum Aufbau und Halten einer Schaumschlacke in vorbestimmter Stärke über der gesamten Querschnittsfläche des Schmelzbades unter Zufuhr eines Schlackenbildners, insbesondere von Kohlenstoff.

Seit Ende der 70-er Jahre werden üblicherweise freistrahlige Lichtbögen in schaumiger Schlacke bei den Elektrolichtbogenöfen gefahren. Hierdurch werden die Feuerfestausmauerungen und die Wasserkühlsysteme des Ofens von der starken Strahlenbelastung abgeschirmt. Darüber hinaus vergleichmäßigt sich auch die elektrische Leistung der Öfen. Insbesondere während der Warmfahrphase verändern sich die Bedingungen für die Energieübertragung durch den Lichtbogen ständig aufgrund der Vorgänge, die sich zwischen der Elektrodenspitze, der Schlacke und dem Bad abspielen. Bei einem Kurzschluß zwischen Elektrode und Bad über dem Schrott, wie er z. B. durch Schrotteinsturz und Badschwingungen hervorgerufen werden kann, setzt sich die dann noch zugeführte Energie hauptsächlich in Graphit um.

Messungen haben ergeben, daß der gesamte elektrische Wirkungsgrad der Energieübertragung gerade noch einmal 36 % beträgt. Taucht der Lichtbogen hingegen zur Hälfte seiner Länge oder aber vollständig in die Schaumschlacke ein, so wird auch die Strahlungsenergie des Bogens zur Hälfte bzw. ganz durch Wärmeleitung der Schlacke an das Stahlbad übertragen. Die Energieausnutzung steigt dann auf 65 bzw. 93 %. Ein optimaler Energieeintrag wird dann erreicht, wenn eine ausreichende Schlackenhöhe zur Verfügung steht und wenn die Schlacke aufgrund ihrer spezifischen Leitfähigkeit den Lichtbogenwiderstand nachbilden kann. Hierbei kann der Wirkungsgrad auf bis zu 100 % durch die zusätzliche Verringerung der Brennfleckverluste ansteigen.

Aus der EP-A1-0 692 544 ist ein Verfahren zur Steuerung der Schaumschlackenbildung im Drehstromlichtbogenofen bekannt, bei dem die Zufuhr von Kohlenstoff zur Schaumschlackenbildung derart vorgegeben wird, daß sowohl eine mindestens teilweise Einhüllung der Lichtbögen realisiert ist, als auch eine überdosierte Zufuhr von Kohlenstoff vermieden wird. Hierzu wird zur Steuerung der Durchsatzrate an Kohlenstoff eine automatische Erfassung einer Schallemission des Lichtbogenofens durchgeführt. Die Amplitude des Schalls wird ausgewertet. Bei einem Überschreiten eines vorgebbaren Schaltpegels wird die Durchsatzrate erhöht und bei einem Unterschreiten des vorgegebenen Schallpegels wird die Durchsatzrate vermindert. Diese Regelung ist jedoch äußerst unbefriedigend. Die Schwierigkeit besteht nun darin, die Schlackenhöhe optimal einzustellen.

Nachteilig bei diesem bekannten Verfahren ist, daß beim Einsatz von Lanzenmanipulatoren im Bereich der Schlackentür ein erheblicher Platzbedarf besteht und darüber hinaus die Lanzen häufig gewechselt werden müssen. Aufgrund des Einblasens der Zusatzstoffe im Bereich der Schlackentür wird in dem angrenzenden Bereich vorzugsweise eine hohe Schlacke erzeugt, während in den übrigen Ofenbereichen mehr oder weniger Schlacke vorhanden ist. Dies bringt wesentliche Nachteile mit sich. Insbesondere findet die Schlackenschäumung nur an einer Stelle statt, so daß eine ausreichende Schlacke in dem der Schlackentür gegenüberliegenden Bereich fehlt. Dies macht sich vor allem bei Elektrolichtbogenöfen bemerkbar, welche mit einem exzentrischen Erkerabstich versehen sind. Werden zusätzlich über die Lanzen Filterstäube oder andere zu recyclende Feststoffe zugeführt, so ist die Menge der zugegebenen Feststoffe insofern beschränkt, weil die Zugabe sich auf eine Stelle im Ofenbereich in Anschluß an die Schlackentür konzentriert. Hierdurch treten leicht Bildungen von festen Agglomeraten auf, die nur schwer aufgeschmolzen werden können. Hinzu kommt, daß es durch die ungleiche Schlackenverteilung in erster Linie auf die Kenntnis des Bedienungspersonals ankommt, wann und in welcher Menge die Zusatzstoffe in den Elektrolichtbogenofen eingeblasen werden müssen.

Der Erfindung liegt die Aufgabe zugrunde, ein Verfahren zum Betrieb eines Lichtbogenofens zum Aufbau und Halten einer Schaumschlacke vorzuschlagen, mit dem nicht nur der Energieverbrauch des Lichtbogenofens insgesamt gesenkt, der Schmelzprozeß optimiert werden kann und auch die Topzu-Top-Zeiten verkürzt und der Verbrauch an Elektrodenmaterial und Feuerfeststoffen und die Geräuschentwicklung verringert werden kann, sondern mit dem auch ein wesentlich schnellerer Aufbau der Schlacke mit gleichmäßiger Verteilung in der Fläche und Höhe des Elektrolichtbogenofens erhalten wird und auch Zuschlackstoffe in größerer Menge als bisher zugegeben werden können.

Diese Aufgabe wird erfindungsgemäß dadurch gelöst, daß die Menge des in den Lichtbogenofen zugeführten Schlakkenbildners in Abhängigkeit des von den Elektroden aufgenommenen Stromes und damit der Leistungsaufnahme des Lichtbogenofens derart geregelt wird, daß zunächst zum Aufbau der Schaumschlacke solange die maximale Menge an Schlackenbildner zugegeben wird, bis sich die Stromaufnahme der Elektroden reduziert, daß anschließend die Menge des zugegebenen Schlackenbildners solange reduziert wird, bis die Stromaufnahme einen vorgegebenen Sollwert erreicht und daß anschließend die Soll-Stromaufnahme durch Verringerung oder Erhöhung der zugegebenen Menge an Schlackenbildner konstant gehalten wird.

Grundlage des erfindungsgemäßen Verfahrens ist somit, daß die Leistungsaufnahme der Elektroden sich dann verringert, wenn die Schaumschlacke eine optimale Höhe erreicht hat. Aus diesem Grunde wird zunächst bei vorgegebener Leistungsaufnahme des Elektrolichtbogenofens eine maximale Menge an Schaumschlacke bildender, insbesondere Kohlenstoff, dem Schmelzbad zugeführt, und zwar solange, bis sich die aufgenommene Leistung auf einen vorgegebenen Sollwert verringert. Unterschreitet die aufgenommene Leistung diesen Sollwert, wird die Zugabe an Schlackenbildner verringert, erhöht sie sich wiederum über die Solleistung, wird die Zugabe an Schlackenbildner entsprechend erhöht. Hierdurch ist es möglich, eine optimale Höhe an Schaumschlacke zu fahren, wobei der Aufbau der Schaumschlacke in kürzester Zeit erfolgt. Vorteilhaft wird der Schlackenbildner über Lanzen zugegeben, die in der Wandung des Ofens angeordnet sind, wobei diese Lanzen die Ofenwandung durchsetzen und in etwa gleichmäßig über den Umfang des Ofens verteilt angeordnet sind. Die Neigung der Lanzen zur Strömungsrichtung der Schmelze hat in etwa einen Winkel von 30 bis 80°. Die Neigung zur Horizontalen beträgt 10 bis 30°.

Die Einblasfläche der Lanzen auf die Schmelzbadoberfläche wird so gewählt, daß die Einblasfläche in Strömungsrichtung der Schmelze jeweils vor der Elektrode liegt. Hierdurch ist darüber hinaus sichergestellt, daß die Schlacke über die gesamte Badoberfläche gleichmäßig verteilt ist. Durch die Lanzen können darüber hinaus auch Zusatzstoffe eingegeben werden, wobei die Menge der eingegebenen Zusatzstoffe wesentlich größer ist, als dies bei herkömmlichen Verfahren der Fall ist, bei denen diese Zusatzstoffe ausschließlich durch die Ofentür mittels Lanzenmanipulatoren zugegeben werden. Hierdurch tritt eine Anhäufung der Zusatzstoffe im Bereich der Ofentür auf, was zur Klumpenbildung und damit zu sehr schwierig zu schmelzenden Agglomeraten führt.

Ein Ausführungsbeispiel der Erfindung ist im folgenden anhand der Zeichnung näher beschrieben. In dieser zeigen:
- Fig. 1 und Fig. 2: eine schematische Draufsicht auf einen Lichtbogenofen mit in der Ofenwandung eingesetzten Lanzen, die in Abhängigkeit der Schmelzbaddrehrichtung angeordnet sind,
- Fig. 3: einen Schnitt durch die Wandung des Elektrolichtbogenofens mit einer eingesetzten Lanze
- und Fig. 4: eine vergrößerte Darstellung des Lanzenendes gemäß Fig. 3.

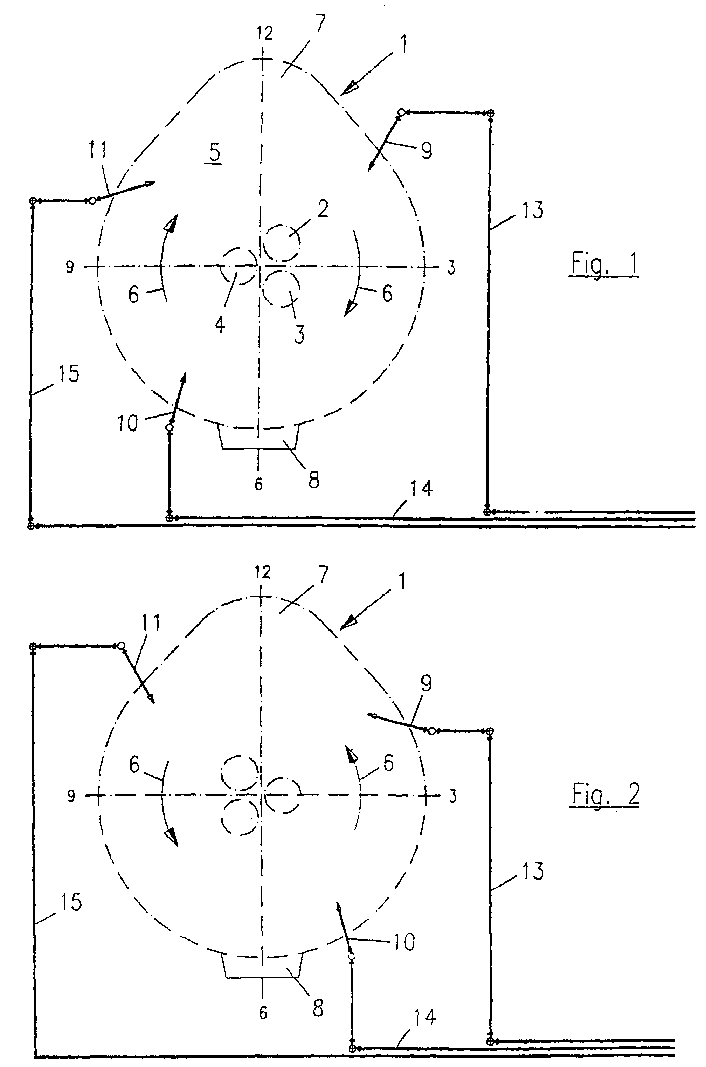

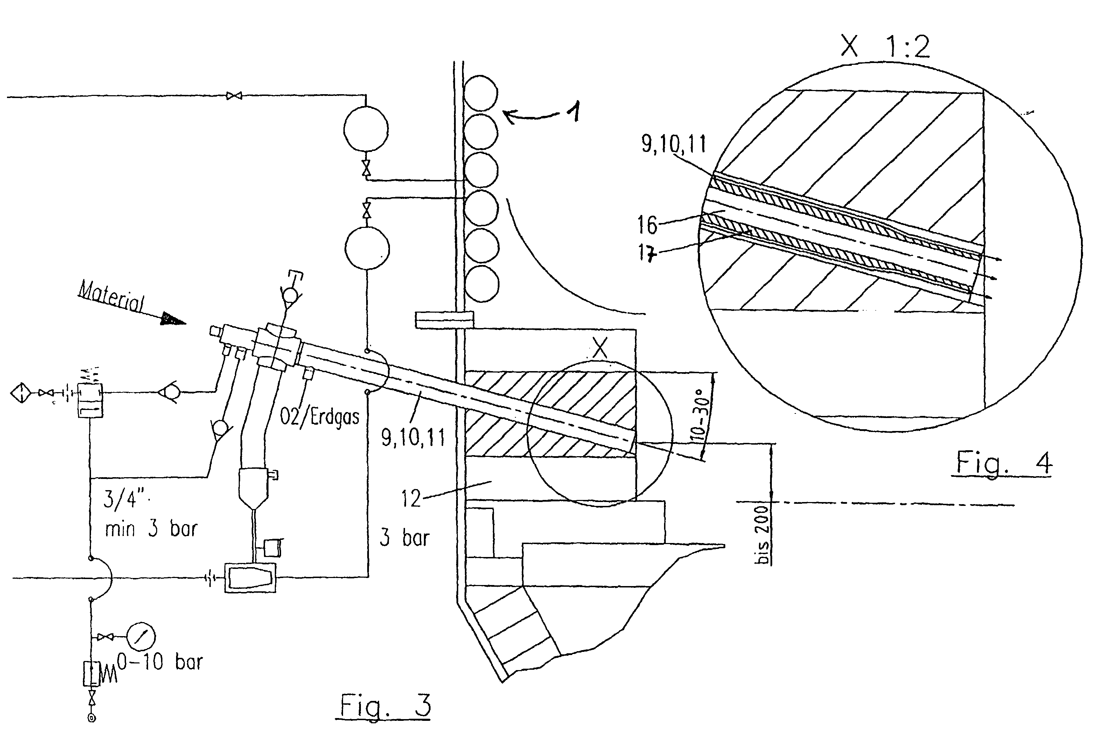

Fig. 1 zeigt eine Draufsicht auch einen erfindungsgemäß ausgebildeten Elektrolichtbogenofen 1, der drei Elektroden 2, 3, 4 aufweist. Die Pfeile 6 kennzeichnen die Drehrichtung des Schmelzbades 5. Der Abstich des Ofens befindet sich im Bereich den erkerförmigen Teiles 7 des Elektrolichtbogenofens 1. Diesem erkerförmigen Teil ? ist die Ofentur 8 gegenüberliegend angeordnet. In der Ofenwandung sind drei Lanzen 9, 10 und 11 angeordnet, welche eine Neigung zur Strömungsrichtung 6 des Schmelzbades 5 aufweisen, welche einen Winkel von 30 bis 80° zu dieser haben. Des weiteren sind die Lanzen 9, 10, 11 auch zur Horizontalen geneigt, wobei hier ein Winkel von 10 bis 30° eingehalten wird. Der Einbau der Lanzen 9, 10, 11 in die Ofenwand 12 ist aus Fig. 3 ersichtlich Durch die Neigung der Lanzen zur Horizontalen und ihre Neigung zur Strömungsrichtung kann eine Schaumschlacke erzeugt werden, welche sich im wesentlichen gleichmäßig über das Schmelzbad 5 des Elektrolichtbogenofens 1 erstreckt. Hierbei liegt die Einblasfläche der Lanzen in Strömungsrichtung gesehen jeweils vor einer Elektrode, so daß sichergestellt ist, daß der am stärksten beanspruchte Wandbereich des Elektrolichtbogenofens immer mit einer ausreichenden Schaumschlacke bedeckt gehalten werden kann. Das Länzenende mündet in einer Höhe bis zu 200 mm oberhalb dem Schmelzbadspiegel.

Jede Lanze 9, 10, 11 ist über eine eigene Versorgungsleitung 13, 14, 15 verbunden, so daß der Förderstrom zu den einzelnen Lanzen 9, 10, 11 individuell gesteuert und so der Geometrie des Ofens Rechnung getragen werden kann.

In Fig. 2 ist ein der Fig. 1 entsprechender Elektrolichtbogenofen 1 dargestellt, wobei sich hier lediglich die Baddrehrichtung 6 geändert hat. Entsprechend wurde auch die Neigung der Lanzen zur Strömungsrichtung 6 des Schmelzbades ausgerichtet, wobei die horizontale Neigung die gleiche wie in dem Ausführungsbeispiel nach Fig. 1 ist.

Fig. 3 zeigt einen vertikalen Schnitt durch eine Ofenwand 12 des Elektrolichtbogenofens 1. Die Lanze ist hier in einem Winkel von ca. 30° in der Ofenwandung angeordnet, wobei diese Lanze so ausgebildet ist, daß über diese gleichzeitig Feststoffe wie auch gasformige Stoffe zugefUhrt werden können. Hierzu weist die Lanze 9, 10, 11 einen Keramikeinsatz 17 auf, wobei durch die zentrale Öffnung 16 die Feststoffe, insbesondere Kohlenstoff, Kalk und zu recyclende Stoffe durchgeleitet werden und über den Zwischenraum zwischen dem Keramikeinsatz und dem Außenrohr gasförmige Stoffe. Durch diese besondere Konstruktion der Lanzen ist es möglich, über ein und dieselbe Lanze nacheinander oder aber auch gleichzeitig Feststoffe und gasformige Medien zuzuführen.

### Aufstellung der Bezugszeichen

- 1 -: Elektrolichtbogenofen
- 2, 3, 4 -: Elektrode
- 5 -: Schmelzbad
- 6 -: Schmelzbaddrehrichtung
- 7 -: Erkerabstich
- 8 -: Ofentür
- 9, 10, 11 -: Lanzen
- 9, 10, 11 -: Förderleitung
- 12 -: Ofenwand
- 13, 14, 15 -: Versorgungsleitung
- 16 -: Öffnung
- 17 -: Keramikeinsatz

## Patentansprüche

1. Verfahren zum Betrieb eines Lichtbogenofens zum Aufbau und Halten einer Schaumschlacke in vorbestimmter Stärke über der gesamten Querschnittsfläche des Schmelzbades unter Zufuhr eines Schlackenbildners, insbesondere von Kohlenstoff,
**dadurch gekennzeichnet, daß**
die Menge des in den Lichtbogenofen zugeführten Schlakkenbildners in Abhängigkeit des von den Elektroden aufgenommenen Stromes und damit der Leistungsaufnahme des Lichtbogenofens derart geregelt wird, daß zunächst zum Aufbau der Schaumschlacke solange die maximale Menge an Schlackenbildner zugegeben wird, bis sich die Stromaufnahme der Elektroden reduziert, daß anschließend die Menge des zugegebenen Schlackenbildners solange reduziert wird, bis die Stromaufnahme einen vorgegebenen Sollwert erreicht und daß anschließend die Soll-Stromaufnahme durch Verringerung oder Erhöhung der zugegebenen Menge an Schlackenbildner konstant gehalten wird.

2. Verfahren nach Anspruch 1, **dadurch gekennzeichnet, daß** die Menge des in den Lichtbogenofen zugeführten Schlakkenbildners 3 bis 15 kg/t beträgt.

3. Verfahren nach einem der Ansprüche 1 oder 2, **dadurch gekennzeichnet, daß** die Schlackenbildner über Lanzen zugegeben werden, die in einer Höhe bis zu 200 mm über der Badoberfläche angeordnet sind.

4. Verfahren nach einem der Ansprüche 1 bis 3, **dadurch gekennzeichnet, daß** dem Schlackenbildner Filterstäube, Walzzunderschlämme und/oder Kalk, aufbereitete Schlämme, Legierungen und/oder Mischungen dieser Stoffe über die Lanzen in die Schmelze zugesetzt werden.

5. Verfahren nach einem der Ansprüche 1 bis 4, **dadurch gekennzeichnet, daß** abwechselnd Schlackenbildner und Filterstäube oder Walzzunderschlämme oder Kalk, oder aufbereitete Schlämme, oder Legierungen oder Mischungen dieser Stoffe über die Lanzen zugesetzt werden.

6. Verfahren nach einem der Ansprüche 1 bis 5, **dadurch gekennzeichnet, daß** jeder Elektrode mindestens eine Lanze zugeordnet ist, die die Ofenwandung durchsetzen und in etwa gleichmäßig über den Umfang des Ofens verteilt angeordnet sind, daß die Neigung der Lanzen zur Strömungsrichtung der Schmelze einen Winkel von etwa 30 bis 80° und zur Horizontalen einen Winkel von etwa 10 bis 30° aufweisen.

7. Verfahren nach einem der Ansprüche 1 bis 6, **dadurch gekennzeichnet, daß** die von der jeweiligen Lanze beaufschlagte Einblasfläche in Strömungsrichtung der Schmelze jeweils vor der Elektrode liegt.

8. Verfahren nach einem der Ansprüche 1 bis 7, **dadurch gekennzeichnet, daß** der Stoffstrom in der Förderleitung zu jeder Lanze individuell gesteuert oder geregelt und überwacht wird.

9. Verfahren nach einem der Ansprüche 1 bis 8, **dadurch gekennzeichnet, daß** neben Kohle, Kalk, Filterstäube, aufbereitete Schlämme und Zunder, Legierungen und/oder Mischungen dieser Stoffe über die Lanzen in die Schmelze eingeblasen werden.

10. Verfahren nach einem der Ansprüche 1 bis 9, **dadurch gekennzeichnet, daß** zumindest die in den Ofenraum ragenden Teile der Lanzen aus Stahl oder aus Kupfer bestehen, wobei zumindest letztere wasser- oder luftgekühlt sind.

11. Verfahren nach einem der Ansprüche 1 bis 10, **dadurch gekennzeichnet, daß** die Lanzen ständig mit einem Fördergas, insbesondere Preßluft, beaufschlagt sind.

12. Verfahren nach einem der Ansprüche 1 bis 11, **dadurch gekennzeichnet, daß** während der Einschmelzphase zusätzlich Sauerstoff und/oder Erdgas über die Lanzen in den Ofen eingeblasen wird.

13. Verfahren nach einen der Ansprüche 1 bis 12, **dadurch gekennzeichnet, daß** mit Beginn der Warmfahrphase abwechselnd Kohlenstoff und/oder Sauerstoff über die Lanzen in den Ofen eingeblasen wird.

## Claims

1. A method of operating an electric-arc furnace in order to build up and maintain foamed slag in a pre-determined strength over the entire cross-sectional area of the molten bath whilst a slag former, in particular carbon, is fed in. **characterized in that** the quantity of the slag former fed into the electric-arc furnace is regulated as a function of the current taken up by the electrodes and thus the power consumption of the electric-arc furnace, in such a way that first, in order to build up the foamed slag. the maximum quantity of slag former is added until the current consumption of the electrodes is reduced, next the quantity of the slag former added is reduced until the current consumption reaches a preset nominal value, and then the nominal current consumption is kept constant by reducing or increasing the quantity of slag former added.

2. A method according to Claim 1, **characterized in that** the quantity of the slag former fed into the electric-arc furnace amounts to from 3 to 15 kg/t.

3. A method according to one of Claims 1 and 2. **characterized in that** the slag formers are fed in by way of lances which are arranged at a height of up to 200 mm above the surface of the bath.

4. A method according to one of Claims 1 to 3. **characterized in that** filter dust, mill-scale slurries and/or lime. prepared slurries. alloys and/or mixtures of these substances are added to the slag former by way of the lances into the melt.

5. A method according to one of Claims 1 to 4, **characterized in that** slag formers and filter dust or mill-scale slurries or lime. or prepared slurries, or alloys or mixtures of these substances are added alternately by way of the lances.

6. A method according to one of Claims 1 to 5, **characterized in that** at least one lance is associated with each electrode, the lances passing through the furnace wall and being arranged distributed substantially uniformly over the periphery of the furnace, and the inclination of the lances forms an angle of from approximately 30 to 80° to the flow direction of the melt and an angle of from approximately 10 to 30° to the horizontal.

7. A method according to one of Claims 1 to 6. **characterized in that** the blow-in area acted upon by the respective lance is situated upstream of the electrode in each case in the flow direction of the melt.

8. A method according to one of Claims 1 to 7. **characterized in that** the flow of material is controlled or regulated and monitored individually in the supply line to each lance.

9. A method according to one of Claims 1 to 8. **characterized in that** in addition to coal. lime, filter dust, prepared slurries and scale, alloys and/or mixtures of these substances are blown into the melt by way of the lances.

10. A method according to one of Claims 1 to 9. **characterized in that** at least the parts of the lances projecting into the furnace space consist of steel or of copper, at least the latter being cooled by water or air.

11. A method according to one of Claims 1 to 10, **characterized in that** the lances are continuously acted upon with a conveyor gas. in particular compressed air.

12. A method according to one of Claims 1 to 11. **characterized in that** during the melting phase oxygen and/or natural gas are additionally blown into the furnace by way of the lances.

13. A method according to one of Claims 1 to 12, **characterized in that** at the start of the hot running phase carbon and/or oxygen are alternately blown into the furnace by way of the lances.

## Revendications

1. Procédé d'exploitation d'un four électrique à arc pour l'établissement et le maintien d'un laitier mousseux d'épaisseur prédéterminée sur toute la surface de la section du bain de fusion, par apport d'un générateur de laitier, en particulier de carbone,
**caractérisé en ce que** la quantité du générateur de laitier apporté dans le four à arc est régulée en fonction du courant consommé par les électrodes, et donc en fonction de la puissance consommée par les électrodes, de telle façon que l'on apporte d'abord la quantité maximale de générateur de laitier jusqu'à ce que la consommation de courant des électrodes se réduise, **en ce qu'**ensuite on réduit la quantité de générateur de laitier apporté jusqu'à ce que la consommation de courant des électrodes atteigne une valeur de consigne prédéterminée, et **en ce que** finalement la valeur de consigne de la consommation de courant est maintenue constante en réduisant ou en augmentant l'apport en générateur de laitier.

2. Procédé suivant la revendication 1, **caractérisé en ce que** la quantité de générateur de laitier apportée dans le four à arc est de 3 à 15 kg/t.

3. Procédé suivant l'une des revendications 1 ou 2, **caractérisé en ce que** les générateurs de laitier sont apportés par des lances qui sont disposées a une hauteur allant jusqu'à 200 mm au-dessus de la surface du bain.

4. Procédé suivant l'une des revendications 1 à 3, **caractérisé en ce qu'**au générateur de laitier, on ajoute dans le lit de fusion, par les lances, des poussières de filtres, des battitures de laminoir et/ou de la chaux, des boues préparées, des alliages et/ou des mélanges de ces produits.

5. Procédé suivant l'une des revendications 1 à 4, **caractérisé en ce qu'**alternativement, des générateurs de laitier et des poussières de filtres, ou des battitures de laminoir ou de la chaux, ou des boues préparées, ou des alliages ou des mélanges de ces produits, sont apportés par les lances.

6. Procédé suivant l'une des revendications 1 à 5, **caractérisé en ce qu'**a chaque électrode est associée au moins une lance, les lances traversant la paroi du four et étant réparties sensiblement régulièrement sur la circonférence du four, **en ce que** l'inclinaison des lances présente un angle d'environ 30 à 80° par rapport au sens d'écoulement du lit de fusion, et un angle d'environ 10 à 30° par rapport à l'horizontale.

7. Procédé suivant l'une des revendications 1 à 6, **caractérisé en ce que** les surfaces d'injection par soufflage couverte par chacune des lances se trouvent chacune en avant de l'électrode, dans le sens de l'écoulement du lit de fusion.

8. Procédé suivant l'une des revendications 1 à 7, **caractérisé en ce que** l'écoulement du produit dans la conduite d'alimentation est commandé, ou régulé, ou contrôlé individuellement pour chaque lance.

9. Procédé suivant l'une des revendications 1 à 8, **caractérisé en ce qu'**à côté de charbon, de chaux, de poussières de filtres, de boues préparées et de calamine, des alliages ou des mélanges de ces produits sont injectés par soufflage par les lances dans le lit de fusion.

10. Procédé suivant l'une des revendications 1 à 9, **caractérisé en ce qu'**au moins les parties des lances dépassant dans l'enceinte du four sont constituées d'acier ou de cuivre, ces dernières au moins étant refroidies par air ou par eau.

11. Procédé suivant l'une des revendications 1 à 10, **caractérisé en ce que** les lances reçoivent constamment un gaz de transport, en particulier de l'air comprimé.

12. Procédé suivant l'une des revendications 1 à 11, **caractérisé en ce que** pendant la phase de fusion, de l'oxygène et/ou du gaz naturel supplémentaire est injecté par soufflage par les lances dans le four.

13. Procédé suivant l'une des revendications 1 à 12, **caractérisé en ce qu'**au début de la phase d'échauffement, alternativement du gaz carbonique et/ou de l'oxygène est injecté par soufflage par les lances dans le four.
